# EUROPEAN PATENT APPLICATION

(11) **EP 1 510 478 A1**
(43) Date of publication of application: **02.03.2005**
(21) Application number: 03077805.4
(22) Date of filing: 01.09.2003
(51) Int. Cl.: B65G 17/06, B65G 21/18

(54) **Stackable conveyor belt**

(71) Applicant: Ashworth Jonge Poerink B.V., 7622 BE Borne (NL)
(72) Inventor: Van Faassen, Willem, 7556 LN Hengelo (ov) (NL)
(74) Representative: 't Jong, Bastiaan Jacob

(57) **Abstract**

The invention relates to a stackable conveyor belt comprising:
- a support surface;
- a plurality of support elements arranged and distributed on at least one longitudinal side of the support surface for supporting at least a part of the conveyor belt, wherein the support elements each comprise at least two interconnected substantially parallel elongate plate parts.

The invention further relates to a transport arrangement.

## Description

The invention relates to a stackable conveyor belt comprising:
- a support surface;
- a plurality of support elements arranged and distributed on at least one longitudinal side of the support surface for supporting at least a part of the conveyor belt.

In the field, such stackable conveyor belts are also called stacker belts. Stacker belts are typically arranged in a multi-tiered hybrid configuration making each tier supported on the tier below and form a stack.

These stacker belts are divided in two groups, full stacker belts and half stacker belts. In a full stacker belt both sides of the support surface are provided with support elements and the belt rests on the belt tier below.

In a half stacker belt, only one side of the support surface is provided with support elements, while the other side is supported by an auxiliary support structure arranged along the side or in the middle of the stack.

As the support elements substantially close off the space between the belt parts in the stack, it depends on the requirements whether a half stacker belt or a full stacker belt is used. When good air flow is required through the different levels of the stack, a half stacker belt is used, such that the air can flow along the side which is not provided with the support elements.

A half stacker belt has the disadvantage that an additional auxiliary support structure has to be provided.

Stacker belts are known wherein the support elements are embodied as single plates and wherein these plates rest onto each other. The use of a single plate as support elements has the disadvantage that the height of the stack is limited due to the risk of buckling of the plate shaped support elements. With such prior art stacker belts the driving force has to be supplied to the stacker belt at several different regions in the conveyor belt.

Furthermore, due to the single plate type support elements, feeding the belt to the stack is very difficult as the single plate type support elements have to be positioned exactly on top of each other. Furthermore, the single plate type support elements have the tendency to bend, such that a correct stacking of the conveyor belt is compromised.

It is an object of the invention to provide a stackable conveyor belt which is more stable and has fewer or no more than the above mentioned disadvantages.

This object is achieved by a stackable conveyor belt which is characterized in that the support elements each comprise at least two interconnected substantially parallel elongate plate parts. These two interconnected parallel elongate plate parts provide a wider base for the next tier of the conveyor belt to be stacked on. If a part of the conveyor belt is not completely correctly positioned, the two interconnected parallel elongate plate parts still provide sufficient basis for the conveyor belt to be supported on.

Due to the parallel elongate plate parts it is now possible to drive the conveyor belt on the links, and it is not necessary to drive the belt onto the rods as is common practice.

As the conveyor belt can be driven onto the links, it is possible to place the driving means outside of the stack and thus outside of the temperature controlled space, in which the stack is placed. This has the advantage that the enclosure of the stack does not require anymore access openings, for access to the temperature controlled space in order to check on the driving means. As the access openings are no longer necessary, the enclosure can be made more air tight. As a result, the energy necessary for controlling the temperature inside the enclosure is reduced. Furthermore the airflow inside the enclosure can be improved, as one does not have to account for access openings or driving means.

Also, as no driving means are present within the temperature controlled enclosure, no excess heat from the motors is added to the air inside the enclosure. This again reduces the energy consumption.

Because the energy consumption is reduced as a result of the above-mentioned features, cooling machines can be designed smaller, reducing the costs for building a complete system.

A preferred embodiment of the stackable conveyor belt according to the invention comprises a repeating interconnected arrangement of:
- longitudinally spaced rods each extending in a lateral direction defining the support surface; and
- connective links connecting the rods together, each connective link comprising legs extending in a longitudinal direction from a lateral cross-member at a closed first end and to an open second end, and defining laterally aligned first apertures on each of said legs at said closed end for reception of a rod, and laterally aligned second apertures at said open end for reception of a rod, whereby the first apertures of a first link are aligned with the second apertures of a second link for reception of a rod thereinto; wherein the at least two interconnected parallel elongate plate parts are arranged on the legs of a connective link.

A conveyor belt with spaced rods and connective links is known per se, but by providing the two interconnected substantially parallel elongate plate parts on the two legs of a connective link an easy to manufacture conveyor belt is provided.

In another embodiment of the conveyor belt according to the invention, the elongate plate part protrudes vertically above and below the respective leg, and the section of the elongate plate part protruding at of the bottomside of the support surface comprises at least one drive opening.

In another preferred embodiment of the stackable conveyor belt according to the invention, the elongate plate parts are perforated. By perforating the plate parts, the same functionality is achieved of a half stacker belt, while still providing support elements on both sides of the support surface. Although the plate parts are perforated, the stackable conveyor belt is still stable, as two plates are used for each support element.

The invention further relates to a transport arrangement comprising:
- a stackable conveyor belt according to the invention, substantially spirally stacked having an entry region, wherein the stackable conveyor belt is fed to the stack and an exit region, wherein the conveyor belt leaves the stack and wherein the at least two interconnected substantially parallel elongate plate parts of each support element support, within the stack, part of the conveyor belt directly adjacent and above the support element;
- a stationary stack support for supporting the stack;
- drive means for rotatably driving the stack, wherein the conveyor belt part leaving the stack at the exit region is led back to the entry region.

Stacker belts according to the prior art have generally a rotatable support table onto which the complete stack is supported. Due to the stable support elements according to the invention it is now possible to provide a non-rotating, stationary stack support.

As the rotatable support table is left out, the height of the stack is reduced, which results in less space consumption and thus lower costs.

In a preferred embodiment the stack support comprises a rail onto which the support elements of the bottom most part of the stack rests. This rail can comprise a plurality of bearing rollers. This provides for a reliable and stable stack support.

In another embodiment of the transport arrangement according to the invention the width of the support surface of the rail is substantially equal to the distance between the at least two interconnected substantially parallel elongate plate parts (so both plate parts rest onto the rail and has the width of the support surfaces almost identical to the distance between the two plate parts, the rail provides for an alignment of subsequent support elements).

In yet another preferred embodiment of the transport arrangement according to the invention, the stack support is stepped at the region at which the conveyor belt is either fed to or leaves the stack, and wherein the height of the step is substantially equal to the height of the support elements. As a rotatable stack support is not necessary anymore and driving the conveyor belt can be done directly on the conveyor belt instead of with the rotatable support, it is now possible to easily feed the conveyor belt to the stack or let the conveyor belt leave the stack at the bottom of the stack. Just by providing a step in the support rail an entry or exit point is created.

In another embodiment of the transport arrangement according to the invention, the drive means engage onto the elongate plate parts. As driving the conveyor belt is no longer necessary by a rotatable stack support, the drive means can be arranged on the conveyor belt. More specifically the drive means can be arranged outside of the stack. This also provides more space for the stack itself as the rotatable stack support is left out.

In another embodiment of the transport arrangement according to the invention, the drive means engage onto the elongate plate parts on both sides of the support surface of the belt.

These and other advantages of the invention will be elucidated in conjunction with the accompanying drawings.
Figure 1 shows in perspective view a schematic embodiment of the transport arrangement according to the invention.
Figure 2 shows in perspective view an embodiment of the support elements of a conveyor belt according to the invention.
Figure 3 shows in perspective view part of the transport arrangement according to figure 1.
Figure 4 shows a detailed view of figure 3.
Figure 5 shows in perspective view the drive means of the transport arrangement according to figure 1.
Figures 6, 7 and 8 shows details of the drive means according to figure 5.
Figure 9 shows an alternative embodiment of a link for a conveyor belt according to the invention.

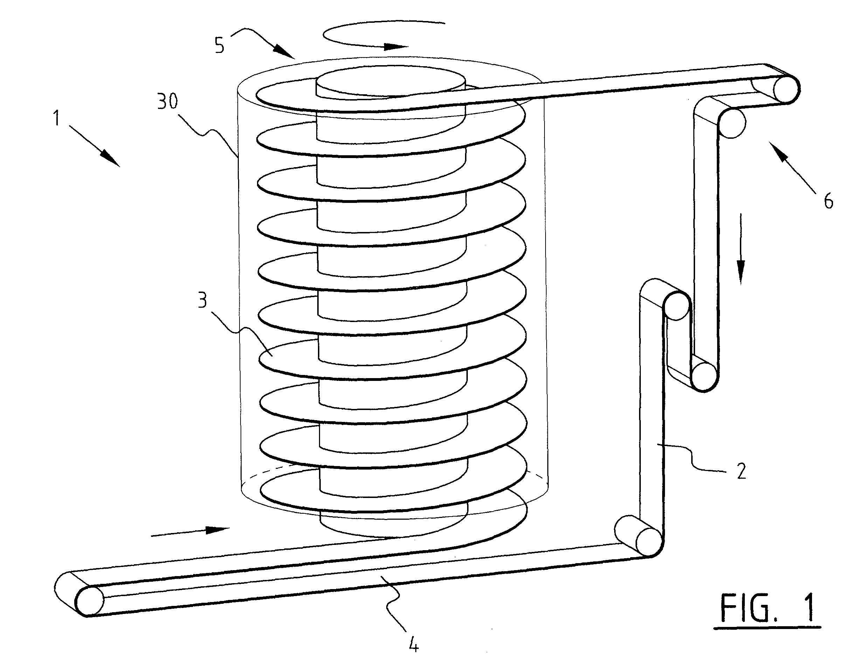

Figure 1 shows in perspective view an embodiment of a transport arrangement 1 according to the invention. This transport arrangement 1 comprises a conveyor belt 2, which is stacked to a spiral stack 3. At the bottom of the stack 3 an entry zone 4 is present where the stackable conveyor belt 2 is fed to the stack 3. At the top of the stack 3 an exit zone 5 is present, where the conveyor belt 2 leaves the stack.

In the part outside of the stack 3 drive means 6 are arranged for driving the conveyor belt 2.

As the drive means 6 are placed outside of the enclosure 30, no excess heat is introduced in the enclosure and furthermore the enclosure can be made more air tight, as no inspection openings are necessary. This results in a lower energy consumption and thus lower overall costs.

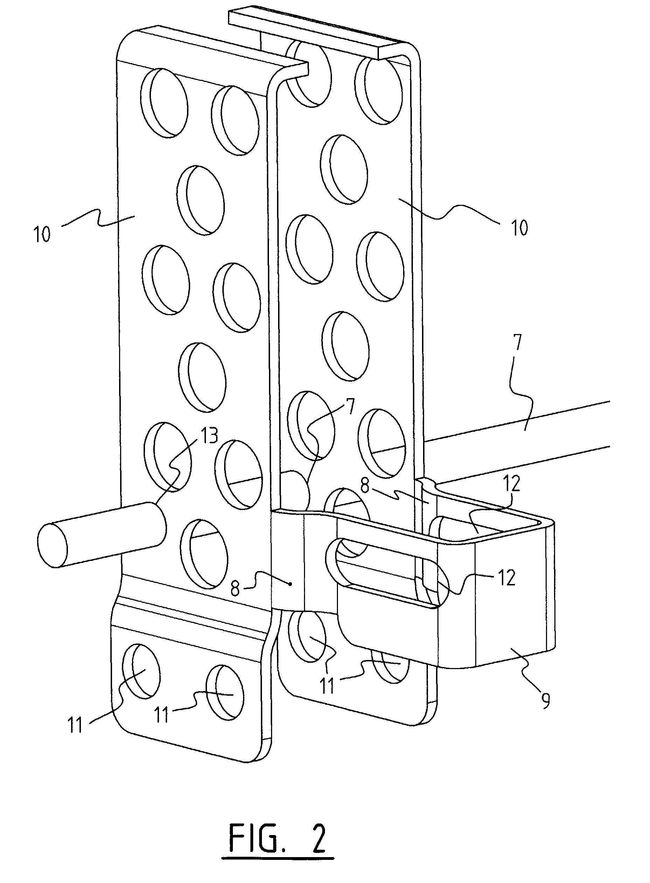

In figure 2 a perspective view is shown of a small part of the conveyor belt 2. The conveyor belt 2 is composed out of longitudinal spaced rods 7 and connective links having two legs 8 and a lateral cross member 9. Two vertically arranged elongate plate parts 10 are arranged onto the legs 8. At the bottom, the plate parts 10 are provided with drive openings 11. The rest of the plate parts 10 are in this embodiment perforated.

The legs 8 comprise first apertures 12 and second apertures 13 through which the rod 7 extend and to which the link is attached.

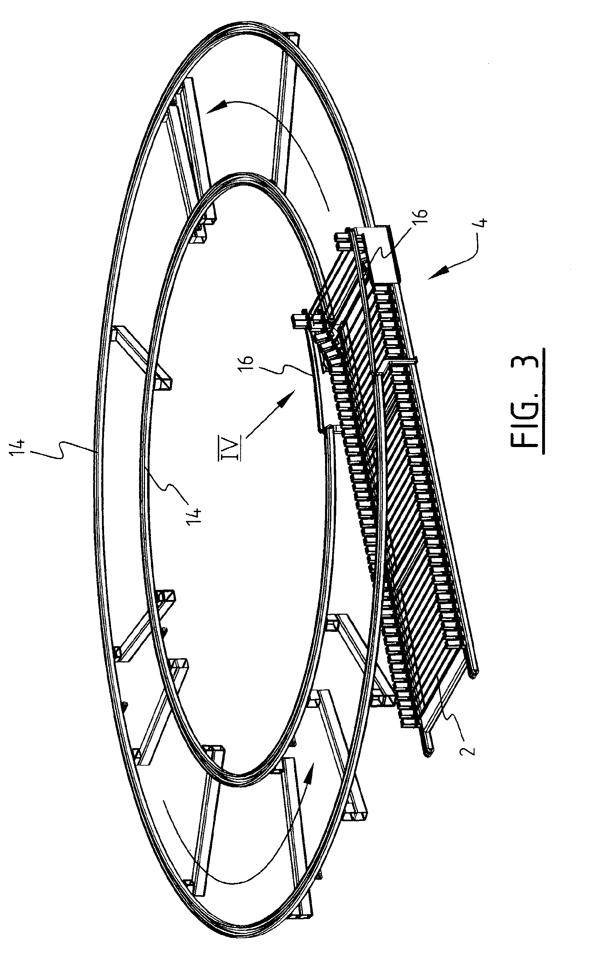

Figure 3 shows the bottom part of the stack 3. Two concentric rails 14 are provided on which the complete stack rests. At the entry zone 4 the conveyor belt 2 is fed to the stack.

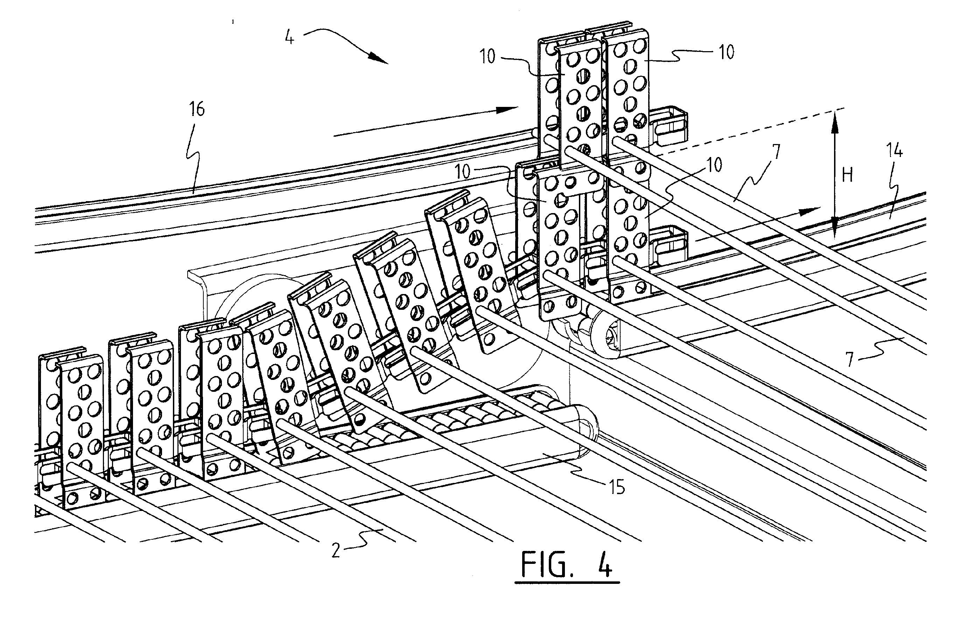

In figure 4 a more detailed view is shown of the entry zone 4. The conveyor belt 2 is guided over a rail 15. At the entry zone 4, the conveyor belt 2 is pulled up onto the rail 14, which is constructionally identical to rail 15. The rail 14 ends into a guide 16 (see figure 3) onto which the rods 7 can rests. These guides 16 guide the conveyor belt to the position where the guide rail 14 starts. At this position the height difference H is substantially equal to the height of the plate parts 10. It is now possible to shift the conveyor belt 2 at the entry zone underneath the already formed stack 3.

It is obvious for a person skilled in the art that by reversing the transport direction, the entry zone can also be the exit zone, wherein the conveyor belt 2 is peeled of at the bottom of the stack and wherein the conveyor belt 2 falls onto the guide rail 15.

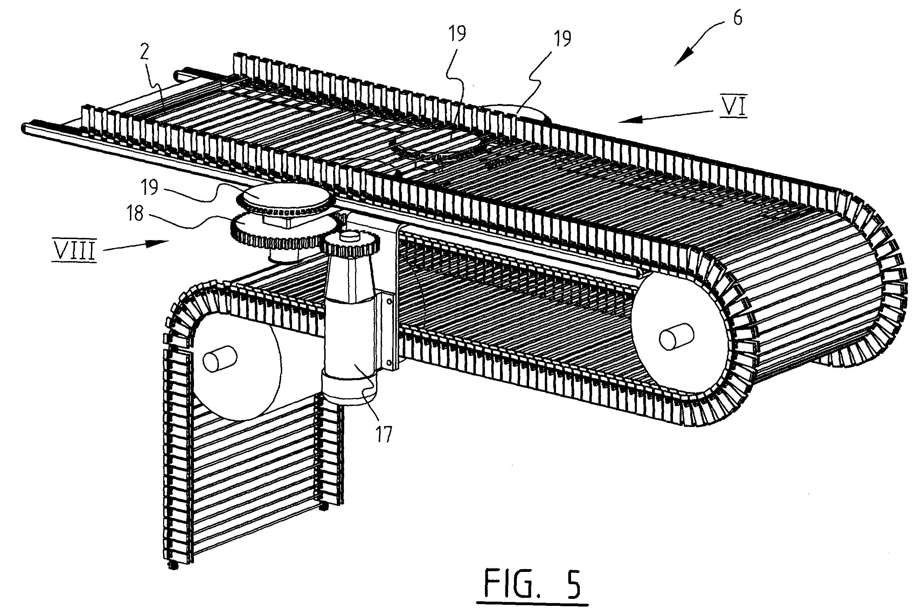

In figure 5 the drive means 6 are shown. The drive means 6 comprise a motor 17, which drives a number of gear wheels 18, which in turn drive spocket wheels 19. The motor 17 can be either electrical, pneumatic or hydraulic.

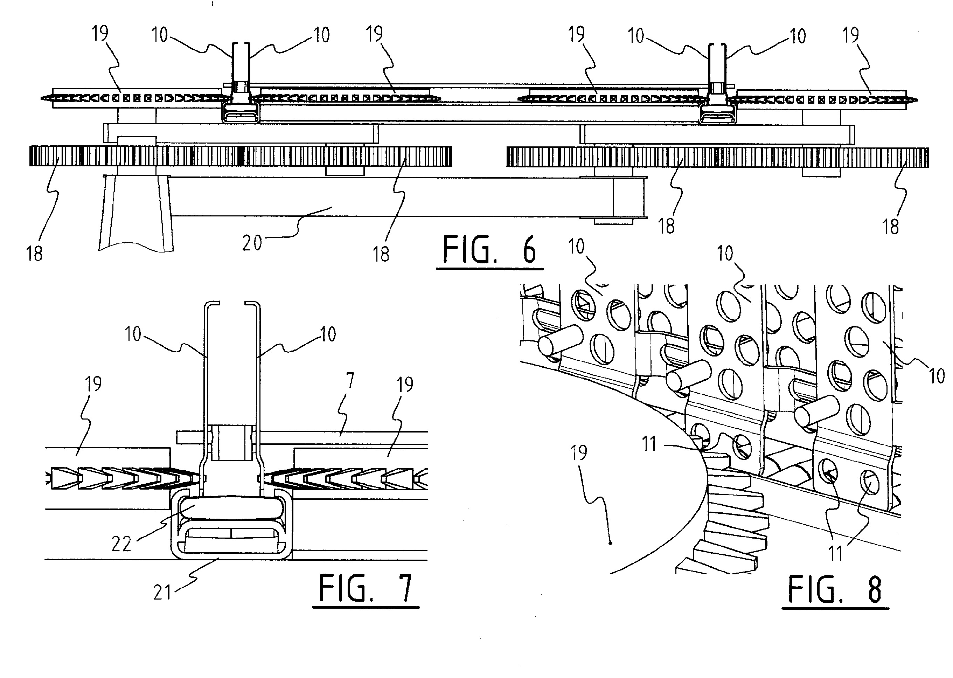

In figure 6 a side view is shown of the drive means. The gear wheels 18 of both sides are connected by toothed belt 20. The spocket wheels 19 engage onto the drive openings 11 of the plate parts 10 (see also figures 7 and 8).

In figure 7 a cross sectional side view is shown of the spockets 19, the plate part 10 and the rail 21, which is identical to rails 14 and 15. The rail 21 comprises a plurality of rollers 22. The plate parts 10 rests onto the rollers 22.

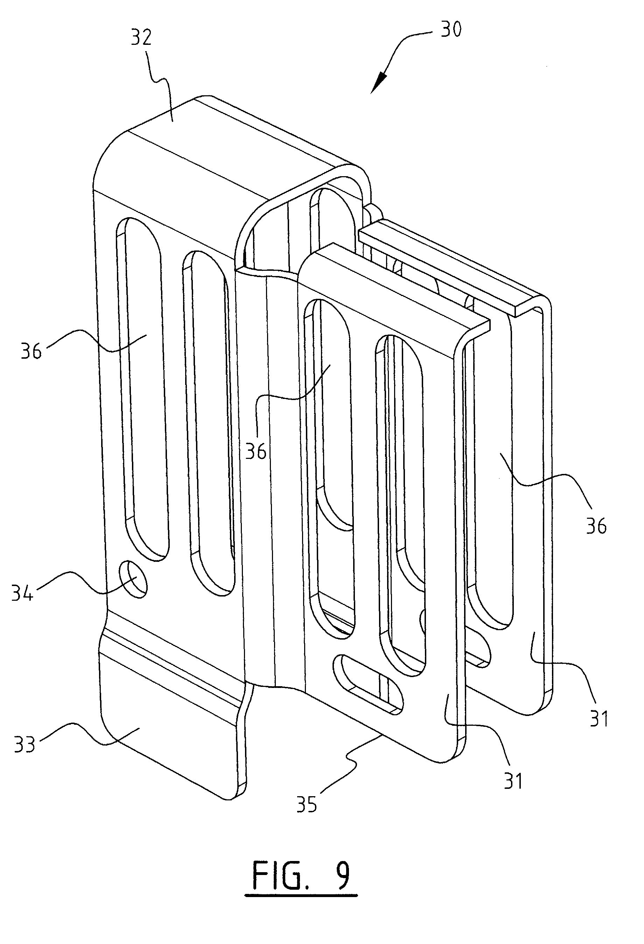

In figure 9 an alternative embodiment of a link 30 for a stackable conveyor belt according to the invention is shown. This link 30 has two elongate plate parts 31, which are interconnected at the top of both plate parts through a connection part 32. The two elongate plate parts 31 have two extension parts 33, which extend to below and which will envelope the connection part 32 of a link of the tier below. The two plate parts 31 are provided with first openings 34 and second openings 35 for reception of respective rods for forming a conveyor belt.

The plate parts 31 are furthermore provided with elongate slits 36 which enable an air flow through the links 30.

It is furthermore possible to provide a link, similar to the link 30, but which is manufactured from a plastic and which might have strengthening ribs extending between the plate parts. It is also possible to provide a solid plastic link.

## Claims

1. Stackable conveyor belt comprising:
- a support surface;
- a plurality of support elements arranged and distributed on at least one longitudinal side of the support surface for supporting at least a part of the conveyor belt,
**characterized in that**
the support elements each comprise at least two interconnected substantially parallel elongate plate parts.

2. Stackable conveyor belt according to claim 1, comprising a repeating interconnected arrangement of:
- longitudinally spaced rods each extending in a lateral direction defining the support surface; and
- connective links connecting the rods together, each connective link comprising legs extending in a longitudinal direction from a lateral cross-member at a closed first end and to an open second end, and defining laterally aligned first apertures on each of said legs at said closed end for reception of a rod, and laterally aligned second apertures at said open end for reception of a rod, whereby the first apertures of a first link are aligned with the second apertures of a second link for reception of a rod thereinto; wherein the at least two interconnected parallel elongate plate parts are arranged on the legs of a connective link.

3. Stackable conveyor belt according to claim 2, wherein the elongate plate parts protrude vertically on each side of the respective leg, and wherein the section of the elongate plate part, protruding at the bottom side of the support surface comprises at least one drive opening.

4. Stackable conveyor belt according to any of the preceding claims, wherein the elongate plate parts are perforated.

5. Transport arrangement comprising:
- a stackable conveyor belt according to any of the preceding claims, substantially spirally stacked having an entry region, wherein the stackable conveyor belt is fed to the stack and an exit region, wherein the conveyor belt leaves the stack and wherein the at least two interconnected parallel elongate plate parts of each support element support, within the stack, part of the conveyor belt directly adjacent and above the support element;
- a stationary stack support for supporting the stack;
- drive means for rotatably driving the stack, wherein the conveyor belt part leaving the stack at the exit region is led back to the entry region.

6. Transport arrangement according to claim 5, wherein the stack support comprises a rail onto which the support elements of the bottom most part of the stack rests.

7. Transport arrangement according to claim 6, wherein the rail comprises a plurality of bearing rollers.

8. Transport arrangement according to claim 7, wherein the width of the support surface of the rail is substantially equal to the distance between the at least two interconnected parallel elongate plate parts.

9. Transport arrangement according to any of the claims 5 - 8, wherein the stack support is stepped at the region at which the conveyor belt is either fed to or leaves the stack, and wherein the height of the step is substantially equal to the height of the support elements.

10. Transport arrangement according to any of the claims 5 - 9, wherein the drive means engage onto the elongate plate parts.

11. Transport arrangement according to claim 10, wherein the drive means engage onto the elongate plate parts on both sides of the support surface of the belt.
